# FASCICULE DE BREVET EUROPEEN

(11) **EP 1 236 386 B1**
(45) Date de publication et mention de la délivrance du brevet: **03.08.2005**
(21) Numéro de dépôt: 02290498.1
(22) Date de dépôt: 28.02.2002
(51) Int. Cl.: A01B 21/08

(54) **Outil de travail du sol, châssis muni d'un tel outil et machine de travail du sol équipée d'un tel châssis**
Bodenbearbeitungsgerät, -gestell und -maschine
Soil working tool, frame and implement

(30) Priorité: 28.02.2001 FR 0102714
(43) Date de publication de la demande: 04.09.2002
(73) Titulaire: Société Nouvelle Fenet, Bergueneuse, 62134 Anvin (FR)
(72) Inventeur: Besson, Patrick, Bergueneuse, 62134 Anvin (FR)
(74) Mandataire: Laget, Jean-Loup

(56) Documents cités:
- FR-A- 2 463 319
- US-A- 1 616 576
- US-A- 1 760 569
- US-A- 2 781 710
- US-A- 2 790 367
- US-A- 2 973 819

## Description

La présente invention concerne un outil de travail du sol tel qu'un disque et son support destiné à être monté sur une machine telle qu'un pulvériseur ou déchaumeuse.

Généralement, les disques sont portés par des trains porteurs qui sont fixés au châssis de la machine. Ces trains peuvent être orientés, par rapport à l'axe d'avancement de la machine sous forme de pulvériseur, en V ou en X de telle sorte que les disques attaquent la terre selon un certain angle tout en étant parallèles à la verticale au sol.

Lorsqu'on a une machine de travail du sol ayant un châssis plus étroit et donc, une machine plus compacte, on préfère une structure dans laquelle les disques sont inclinés selon un certain angle par rapport à la verticale au sol. Cette inclinaison est obtenue par un montage individuel des disques sur le châssis, chaque disque étant monté sur un palier fixé sur un support, par exemple une dent à ressort.

Une telle machine de travail du sol permet un travail du sol plus stable mais présente l'inconvénient de ne pas être économiquement intéressante.

On a proposé, par exemple dans US-A-2 973 819 et US-A-2 790 367, de monter deux disques sur un même palier. Cet ensemble disques/palier est raccordé à une tige de fixation au châssis de la machine de travail du sol, par un boîtier entourant ladite tige à son extrémité opposée au châssis et portant le palier pourvu des deux disques de diamètres différents. La tige présente une partie perpendiculaire au châssis puis elle forme un coude, ladite tige étant montée sur le châssis de manière à pouvoir être orientée angulairement par rapport à celui-ci par rotation de sa partie perpendiculaire. Le boîtier portant le palier est monté entraînable en rotation par rapport à la tige. Par conséquent, il existe deux possibilités de réglages angulaires de l'ensemble de disques permettant un réglage angulaire de l'ensemble par rapport à l'axe vertical défini par la partie perpendiculaire de la tige et un réglage angulaire du boîtier et, donc du palier, par rapport à la tige pour définir l'inclinaison angulaire des disques par rapport au sol.

Un tel dispositif se révèle coûteux du fait du nombre important de pièces et, en outre, il est également complexe à mettre en oeuvre, demandant à l'utilisateur deux réglages successifs pour atteindre la position optimale. De plus, les disques sont montés sur le palier de sorte que la partie concave du disque de plus grand diamètre se trouve dirigée vers le palier tandis que la partie concave du plus petit disque se trouve dirigée vers l'extérieur. On a pu remarquer que, dans cette configuration des disques, lorsque ceux-ci sont inclinés par rapport au sol, on n'obtient pas un angle d'attaque des disques suffisamment performant, le travail du sol ainsi pratiqué étant insatisfaisant.

Dans US-A-2 781 710, on a proposé un ensemble de disques porté par un même palier. Ces disques présentent des diamètres différents de manière à pouvoir être utilisé sur une machine travaillant à flanc de coteau. Le palier est inclinable par rapport à l'axe vertical de fixation au châssis pour régler la position des disques par rapport au sol qui ne se trouve plus dans un plan horizontal mais incliné. Ces disques sont montés sur le palier de telle sorte que la partie du concave du disque de plus grand diamètre se trouve dirigée vers le palier tandis que la partie concave du disque de plus petit diamètre est dirigé vers l'extérieur de l'ensemble. Dans ce cas également, on a pu constater que la qualité de travail du sol par les disques restait insatisfaisante.

La présente invention a pour but de proposer un outil de travail du sol destiné à être monté sur une machine de travail du sol par l'intermédiaire d'un support, tel qu'une dent à ressort qui offre à la fois un bon travail de la terre en offrant un angle d'attaque du sol très agressif et qui est économiquement intéressant.

A cet effet, l'invention a pour objet un outil de travail du sol constitué d'un disque monté sur un palier et destiné à être monté sur un châssis de machine de travail du sol par l'intermédiaire d'un support, le palier portant un second disque de diamètre inférieur au diamètre du premier, caractérisé en ce que le palier est agencé pour pouvoir être raccordé au support avec son axe incliné par rapport au sol, chaque disque étant monté de part et d'autre du palier la partie concave du disque de diamètre inférieur étant dirigée vers le palier tandis que la partie concave du disque de grand diamètre est dirigée vers l'extérieur de l'ensemble constitué par les disques et le palier.

Ainsi, de manière avantageuse, l'inclinaison de l'axe du palier permet l'inclinaison des deux disques par rapport à la verticale au sol et le second disque étant de diamètre inférieur à celui du premier, la profondeur de travail du second disque est la même que la profondeur du premier, ce qui ne serait pas le cas si les disques étaient de même diamètre ou si l'axe du palier était parallèle au sol.

De plus, la configuration des disques de différents diamètres sur le palier, le grand disque dos au palier et le petit disque tourné vers le palier, définit, avec l'inclinaison des disques par rapport au sol et avec l'inclinaison des disques par rapport à l'axe d'avancement de la machine de travail du sol, un angle d'attaque du sol plus agressif permettant un travail plus performant de la terre.

L'invention permet d'obtenir un outil de travail du sol performant et d'un moindre coût puisqu'on utilise maintenant un palier pour deux disques. De plus, le palier peut être raccordé sur tout type de support et présente toujours un axe incliné.

L'invention concerne également un châssis pour machine de travail du sol porteur d'outils, caractérisé en ce qu'il comporte des outils selon l'invention ainsi qu'une machine de travail du sol comportant un tel châssis.

On décrira maintenant plus en détail un exemple de réalisation de l'invention en référence en référence au dessin en annexe dans lequel :
la figure 1 représente une vue en perspective d'un outil de travail selon l'invention monté sur un support ;
la figure 2 représente une vue schématique en coupe d'un outil selon l'invention ;
la figure 3 représente une vue du dessus de l'outil selon l'invention ; et

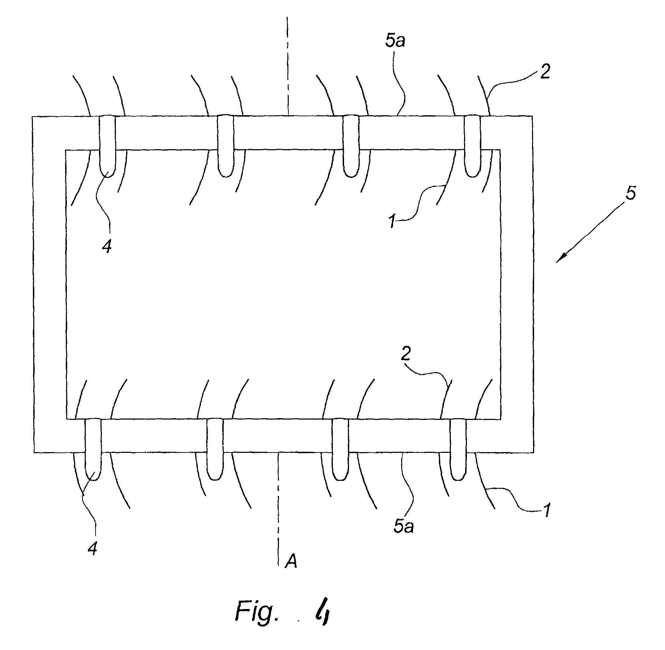

la figure 4 représente une vue du dessus d'un châssis porteur d'outils selon l'invention.

Un outil de travail du sol selon un exemple de réalisation de l'invention est constitué de deux disques 1 et 2 et d'un palier 3.

Le premier disque 1 présente un diamètre supérieur au diamètre du second disque 2 et chaque disque est monté de part et d'autre du palier 3.

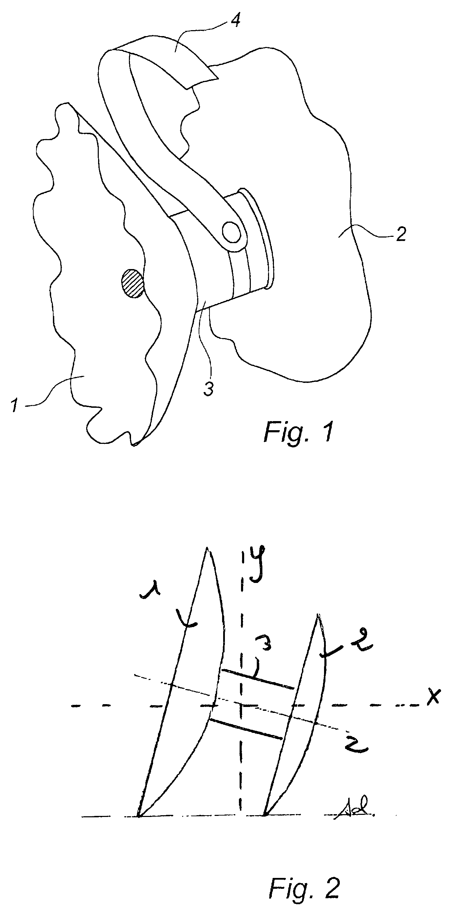

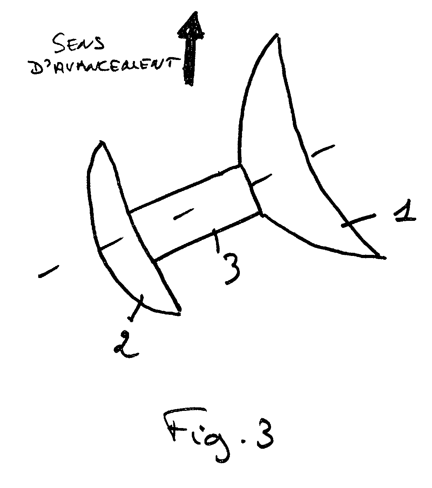

Le disque de plus grand diamètre 1 est monté sur le palier 3, dos au palier 3, c'est-à-dire que sa partie concave est dirigée vers l'extérieur de l'ensemble constitué par le palier 3 et les disques 1, 2 alors que le disque 2 de diamètre inférieur est monté sur le palier 3, dos vers l'extérieur, c'est-à-dire que sa partie concave est dirigée vers le palier 3 comme on peut le voir aux figures 2 et 3.

L'outil est monté sur le châssis 5 d'une machine de travail du sol, tel qu'un pulvériseur à disques, à l'aide d'un support tel qu'une dent à ressort 4, son axe z étant incliné par rapport au sol (axe x) comme on peut le voir à la figure 2.

De cette manière, les disques 1 et 2 sont inclinés par rapport à la verticale y au sol et présentent un angle d'attaque du sol. La différence de diamètres entre les deux disques 1 et 2 et l'angle d'inclinaison permettent aux disques 1 et 2 de travailler à la même profondeur avec un angle d'attaque d'une grande agressivité.

Les disques 1, 2 sont également inclinés par rapport au sens d'avancement, c'est-à-dire qu'ils ne tiennent pas dans un plan vertical parallèle à l'axe d'avancement mais dans un plan décalé angulairement par rapport à celui-ci comme on peut le voir à la figure 3 ce qui favorise également l'angle d'attaque.

De tels outils de travail sont avantageusement utilisés sur des machines de travail du sol présentant un châssis 5 compact et étroit, par exemple en forme de rectangle, les outils étant positionnés alignés le long des montants 5a perpendiculaires à l'axe d'avancement de la machine, comme cela est visible à la figure 3.

## Revendications

1. Outil de travail du sol constitué d'un disque (1) monté sur un palier (3) et destiné à être monté sur un châssis (5) de machine de travail du sol par l'intermédiaire d'un support (4), le palier (3) portant un second disque (2) de diamètre inférieur au diamètre du premier (1),
**caractérisé en ce que** le palier (3) est agencé pour pouvoir être raccordé au support (4) avec son axe (z) incliné par rapport au sol, chaque disque (1, 2) étant monté de part et d'autre du palier (3), la partie concave du disque (2) de diamètre inférieur étant dirigée vers le palier (3) tandis que la partie concave du disque (1) de grand diamètre est dirigée vers l'extérieur de l'ensemble constitué par les disques (1, 2) et le palier (3).

2. Outil de travail du sol selon la revendication 1,
**caractérisé en ce que** les disques (1, 2) sont inclinés par rapport au sens d'avancement de la machine de travail du sol.

3. Châssis (5) pour machine de travail du sol tel qu'en forme de rectangle,
**caractérisé en ce qu'**il présente, le long de ses montants (5a) perpendiculaires à l'axe d'avancement dudit châssis (5), des outils de travail du sol, selon l'une des revendications 1 et 2.

4. Machine de travail du sol,
**caractérisée en ce qu'**elle comporte un châssis selon la revendication 3.

## Patentansprüche

1. Bodenbearbeitungsgerät, welches aus einer auf einem Lager (3) montierten Scheibe (1) besteht und dazu bestimmt ist, an einem Gestell (5) einer Bodenbearbeitungsmaschine vermittels eines Trägers (4) montiert zu werden, wobei das Lager (3) eine zweite scheibe (2) trägt, deren Durchmesser geringer ist als der Durchmesser der ersten (1),
**dadurch gekennzeichnet, dass** das Lager (3) angeordnet ist, um derart an den Träger (4) angeschlossen zu werden, dass seine Achse (z) in Bezug auf den Boden geneigt ist, wobei die Scheiben (1, 2) beidseitig des Lagers (3) montiert sind, wobei der konkave Teil der Scheibe (2) geringeren Durchmessers zu dem Lager (3) hin gerichtet ist, während der konkave Teil der Scheibe (1) großen Durchmessers zum Außenbereich der aus den Scheiben (1, 2) und dem Lager (3) bestehenden Anordnung hin gerichtet ist.

2. Bodenbearbeitungsgerät nach Anspruch 1,
**dadurch gekennzeichnet, dass** die Scheiben (1, 2) in Bezug auf die Vorschubrichtung der Bodenbearbeitungsmaschine geneigt sind.

3. Gestell (5) für eine Bodenbearbeitungsmaschine in Form eines Rechtecks,
**dadurch gekennzeichnet, dass** es entlang seinem senkrecht zu der Vorschubachse des genannten Gestells (5) verlaufenden Ausstrebungen (5a) Bodenbearbeitungsgeräte nach einem der Ansprüche 1 und 2 aufweist.

4. Bodenbearbeitungsmaschine,
**dadurch gekennzeichnet, dass** sie ein Gestell nach Anspruch 3 aufweist.

## Claims

1. Soil working tool, comprising a disc (1) mounted on a bearing (3) and intended to be mounted on a frame (5) of a soil working machine through the intermediary of a support (4), the bearing (3) carrying a second disc (2) with a diameter smaller than the diameter of the first disc (1), **characterised in that** the bearing (3) is designed to be able to be connected to the support (4) with its axis (z) inclined relative to the soil, each disc (1, 2) being mounted on each side of the bearing (3), the concave portion of the disc (2) with the smaller diameter being directed towards the bearing (3), while the concave portion of the disc (1) with the large diameter is directed towards the exterior of the assembly comprising the discs (1, 2) and the bearing (3).

2. Soil working tool according to claim 1, **characterised in that** the discs (1, 2) are inclined relative to the direction of advancement of the soil working machine.

3. Frame (5) for a soil working machine, having a rectangular configuration for example, **characterised in that** it has, along its struts (5a) perpendicular to the axis of advancement of said frame (5), soil working tools according to one of claims 1 and 2.

4. Soil working machine, **characterised in that** it includes a frame according to claim 3.
